# EUROPEAN PATENT SPECIFICATION

(11) **EP 2 136 956 B1**
(45) Date of publication and mention of the grant of the patent: **04.12.2013**
(21) Application number: 08718559.1
(22) Date of filing: 07.03.2008
(51) Int. Cl.: B23K 9/32, B23K 9/28

(54) **MIG- OR MAG-WELDING GUN**
MIG- ODER MAG-SCHWEISSPISTOLE
PISTOLET À SOUDER MIG OU MAG

(30) Priority: 09.03.2007 FI 20075164
(43) Date of publication of application: 30.12.2009
(73) Proprietor: Ergowelder Oy, 83400 Viinijärvi (FI)
(72) Inventor: Kettunen Erkki Tapio, 83400 Viinijärvi (FI)
(74) Representative: LEITZINGER OY
(86) International application number: PCT/FI2008/050106
(87) International publication number: WO 2008/110663

(56) References cited:
- WO-A1-02/34450
- US-A- 4 161 643

## Description

The invention relates to a MIG- or MAG-welding gun, comprising a hand-held handle for supporting, handling and aiming the welding gun during a welding process, the handle including a body member and a grip member pivotable relative to the body member and lying alongside the body member at least partially over the same lengthwise extent as the body member, whereby the grip member has its free end pivotable to such a distance from the body member that a hand grasping around the pivotable grip member fits between the body member and the pivotable grip member, the body member resting on top of the hand.

Patent publications WO 0234450 and US-4161643 disclose a pistol type handle of this type, including a pivotable grip. These handles have not become generally popular for the reason of being heavy and only enabling one type of operating mode in which the hand is always under the body. Consequently, the models in general use are those without a handgun grip protruding from the body, but instead the body of a "welding gun" also functions at the same time as a grip or a handle.

In welding guns of this type, the welding wire and shielding gas are passed axially lengthwise of a handle through the handle. The handle has an extension in the form of an arcuate shank, having its end provided with a welding nozzle and a shielding gas dome surrounding the nozzle.

A problem with such welding guns is that, in the process of welding various types of joints, the hand position may be wrong and the hand becomes tired as a result of having to support the welding gun. This makes welders susceptible to neck and shoulder ailments and the arm and palm may develop repetitive stress injuries, such as tendovaginitis.

Patent publication US-6,225,599 discloses a MIG-welding gun, the handle of which comprises two axially successive handle elements, with e.g. a 20° angle therebetween. Even this does not eliminate the problem that, in the case of some welding joints, such as in overhead fillet and horizontal vertical fillet welding processes, the welding gun must nevertheless be supported by a hand in a slightly raised position in which the hand becomes tired.

It is an object of the invention to provide an ergonomic MIG- or MAG-welding grip, which enables changing the position of a hand between various types of welding joint in such a way that, e.g. in overhead fillet welding and vertical horizontal fillet welding processes, the hand can be held at quite a low level in a rest position while the body of a handle rests on top of the hand, whereby the hand does not get tired as easily as in the case of currently available welding guns.

This object is accomplished by the invention on the basis of the characterizing features presented in the appended claim 1. Preferred embodiments of the invention are presented in the dependent claims.

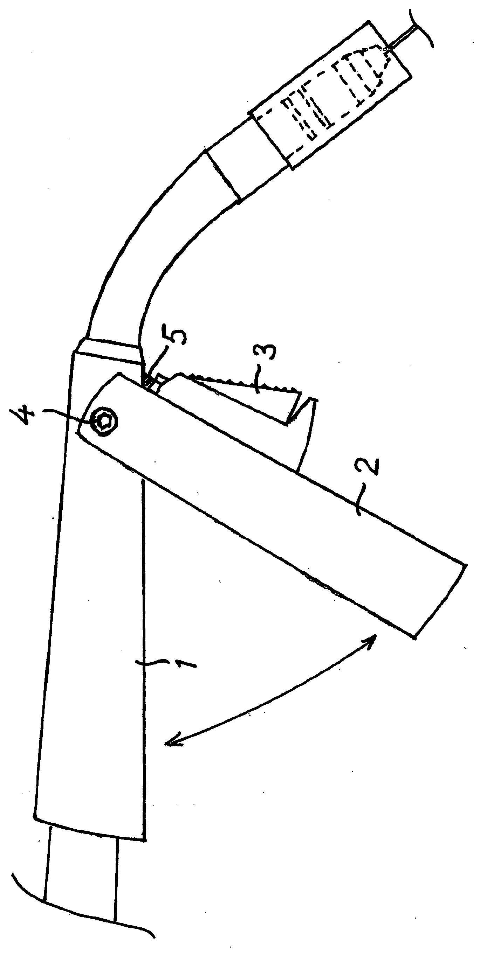

One exemplary embodiment of the invention will now be described more closely with reference to the accompanying drawing, which shows a MIG- or MAG-welding gun of the invention in a side view.

In the illustrated exemplary embodiment, the welding gun comprises a body member 1 and a grip member 2 pivotable relative thereto and lying alongside the body member over at least part of the same longitudinal extent as the body member. The grip member 2 has its free end pivotable to such a distance from the body member 1 that a hand grasping around the pivotable grip member 2 fits between the body member 1 and the pivotable grip member 2, the body member 1 resting on top of the hand in this working position. When the pivotable grip member 2 has its free end in its position pivoted into the engagement with the bodv member 1. the body member 1 and the pivotable grip member 2 constitute jointly a handle for the hand to grasp around. Depending on whether a hand is used to grasp an opened-up grip member 2 or a handle constituted jointly by the closed-in grip member 2 and the body member 1, it will be possible to choose the best possible position for the hand in the process of welding different types of joints.

An actuating trigger 3 is included in the pivotable grip member 2 along its side facing away from the body member 1, in the proximity of that end of the pivotable grip member 2 which is provided with a pivot link 4. Thus, in the illustrated embodiment, the grip member 2 connects directly by way of the pivot link 4 to that end of the body member 1 which is closer to the nozzle end of the welding gun. A single pivot link 4 is the simplest and most cost-efficient solution. In practice, it does not increase the price of a welding gun at all. Still, instead of a simple pivot link 4, it is of course possible to employ other mechanisms as well, such as a combination of a pivot link and a slide, by means of which the components 1 and 2 can be brought appropriately apart from each other for a hand to fit therebetween while the hand is in a grasp around the grip member 2.

The pivotable grip member 2 further includes a limiter 5 for its pivoting angle, by means of which the pivoting angle is adjustable. Housed in the grip member 2 can be for example a thumbwheel for this adjustment. The pivotable grip member 2 has its pivoting angle relative to the body member's 1 longitudinal axis within the range of 30-75°, preferably 40-60°. Of course, the angle can be smaller if the pivoting motion is accompanied by said slide mechanism.

The pivotable grip member 2 is preferably in the shape of a trough, whereby the trough can be dimensioned to fit over the body member in a way that the body member 1 is at least partially accommodated within the trough.

In the illustrated case, the body member 1 and pivotable grip member 2 constitute jointly a V-fork as the pivotable grip member 2 is in its position turned away from the body member 1.

## Claims

1. A MIG- or MAG-welding gun, comprising a hand-held handle for supporting, handling and aiming the welding gun during a welding process, the handle including a body member (1) and a grip member (2) pivotable relative to the body member (1) and lying alongside the body member over at least part of the same lengthwise extent as the body member, whereby the grip member (2) has its free end pivotable to such a distance from the body member (1) that a hand grasping around the pivotable grip member (2) fits between the body member (1) and the pivotable grip member (2), the body member (1) resting on top of the hand, **characterized in that** the pivotable grip member (2) is in the shape of a trough, the trough being dimensioned to fit over the body member (1) in a way that the body member (1) is at least partially accommodated within the trough, and that, when the pivotable grip member (2) has its free end in its position pivoted into the engagement with the body member (1), these two components constitute jointly a handle for the hand to grasp around.

2. A welding gun as set forth in claim 1, **characterized in that** an actuation trigger (3) is included in the pivotable grip member (2) on its the side facing away from the body member (1), in the proximity of that end of the grip member (2) which is provided with a pivot link (4).

3. A welding gun as set forth in claim 1 or 2, **characterized in that** the pivotable grip member (2) includes a limiter (5) for its pivoting angle, by means of which the pivoting angle is adjustable.

4. A welding gun as set forth in any of claims 1-3, **characterized in that** the pivotable grip member (2) has its pivoting angle relative to the body member's (1) longitudinal axis within the range of 30-75°, preferably 40-60°.

5. A welding gun as set forth in any of claims 1-4, **characterized in that** the handle has its body member (1) and pivotable grip member (2) jointly constituting a V-fork as the pivotable grip member (2) is in its position pivoted away from the body member (1).

## Patentansprüche

1. MIG- oder MAG-Schweißbrenner, der einen Handgriff zum Stützen, Handhaben und Zielen des Schweißbrenners während eines Schweißprozesses umfasst, wobei der Handgriff ein Korpuselement (1) und ein Greifelement (2) enthält, das relativ zu dem Korpuselement (1) geschwenkt werden kann und sich entlang des Korpuselements über mindestens einen Teil derselben Längserstreckung wie das Korpuselement erstreckt, wobei das freie Ende des Greifelements (2) in einem solchen Abstand von dem Korpuselement (1) geschwenkt werden kann, dass eine Hand, die um das schwenkbare Greifelement (2) greift, zwischen das Korpuselement (1) und das schwenkbare Greifelement (2) passt, wobei das Korpuselement (1) auf der Hand ruht, **dadurch gekennzeichnet, dass** das schwenkbare Greifelement (2) die Form einer Mulde hat, wobei die Mulde so bemessen ist, dass sie in einer solchen Weise über das Korpuselement (1) passt, dass das Korpuselement (1) mindestens teilweise innerhalb der Mulde aufgenommen ist, und dass, wenn sich das freie Ende des schwenkbaren Greifelements (2) in einer Position befindet, in der es in Eingriff mit dem Korpuselement (1) geschwenkt ist, diese zwei Komponenten gemeinsam einen Handgriff bilden, den die Hand umfassen kann.

2. Schweißbrenner nach Anspruch 1, **dadurch gekennzeichnet, dass** ein Betätigungsauslöser (3) in dem schwenkbaren Greifelement (2) auf seiner Seite, die von dem Korpuselement (1) fort weist, in der Nähe jenes Endes des Greifelements (2), an dem sich eine Schwenkverbindung (4) befindet, enthalten ist.

3. Schweißbrenner nach Anspruch 1 oder 2, **dadurch gekennzeichnet, dass** das schwenkbare Greifelement (2) einen Begrenzer (5) zu seinem Schwenkwinkel enthält, mit dem der Schwenkwinkel justiert wird.

4. Schweißbrenner nach einem der Ansprüche 1-3, **dadurch gekennzeichnet, dass** der Schwenkwinkel des schwenkbaren Greifelements (2) relativ zur Längsachse des Korpuselements (1) in einem Bereich von 30-75°, bevorzugt 40-60°, liegt.

5. Schweißbrenner nach einem der Ansprüche 1-4, **dadurch gekennzeichnet, dass** das Korpuselement (1) und das schwenkbare Greifelement (2) des Handgriffs zusammen eine V-Gabel bilden, wenn sich das schwenkbare Greifelement (2) in seiner Position befindet, die von dem Korpuselement (1) fortgeschwenkt ist.

## Revendications

1. Pistolet à souder MIG ou MAG, comprenant une poignée à tenir d'une main pour supporter, manipuler et diriger le pistolet à souder au cours d'un processus de soudage, la poignée comprenant un organe de corps (1) et un organe de préhension (2) pouvant pivoter par rapport à l'organe de corps (1) et reposant le long de l'organe de corps sur au moins une partie de la même étendue longitudinale que l'organe de corps, de telle manière que l'extrémité libre de l'organe de préhension (2) puisse pivoter à une distance de l'organe de corps (1) telle qu'une main empoignant l'organe de préhension pouvant pivoter (2) s'adapte entre l'organe de corps (1) et l'organe de préhension pouvant pivoter (2), l'organe de corps (1) reposant dessus la main, **caractérisé en ce que** l'organe de préhension pouvant pivoter (2) a la forme d'un creux, le creux étant dimensionné pour s'adapter sur l'organe de corps (1) de telle manière que l'organe de corps (1) soit au moins partiellement logé à l'intérieur du creux, et **en ce que**, lorsque l'extrémité libre de l'organe de préhension pouvant pivoter (2) est à sa position pivotée pour se mettre en prise avec l'organe de corps (1), ces deux composants constituent conjointement une poignée que la main peut empoigner.

2. Pistolet à souder selon la revendication 1, **caractérisé en ce qu'**une gâchette d'actionnement (3) est incluse dans l'organe de préhension pouvant pivoter (2) sur le côté faisant face à l'écart de l'organe de corps (1), à proximité de l'extrémité de l'organe de préhension (2) qui est pourvue d'une liaison de pivot (4).

3. Pistolet à souder selon la revendication 1 ou 2, **caractérisé en ce que** l'organe de préhension pouvant pivoter (2) comprend un limiteur (5) pour son angle de pivotement, au moyen duquel l'angle de pivotement est ajustable.

4. Pistolet à souder selon l'une quelconque des revendications 1 à 3, **caractérisé en ce que** l'angle de pivotement de l'organe de préhension pouvant pivoter (2) par rapport à l'axe longitudinal de l'organe de corps (1) est dans la plage de 30 à 75°, de préférence de 40 à 60°.

5. Pistolet à souder selon l'une quelconque des revendications 1 à 4, **caractérisé en ce que** l'organe de corps (1) et l'organe de préhension pouvant pivoter (2) de la poignée constituent conjointement une fourche en V lorsque l'organe de préhension pouvant pivoter (2) est à sa position pivotée à l'écart de l'organe de corps (1).
